# EUROPEAN PATENT APPLICATION

(11) **EP 3 448 046 A1**
(43) Date of publication of application: **27.02.2019**
(21) Application number: 17187479.5
(22) Date of filing: 23.08.2017
(51) Int. Cl.: H04N 21/41, H04N 21/44, H04N 21/439, H04N 21/436

(54) **METHOD FOR CONTROLLING OF EXTERNAL DEVICES IN DEPENDENCY OF VIDEO AND/OR AUDIO CONTENT**

(71) Applicant: Vestel Elektronik Sanayi ve Ticaret A.S., 45030 Manisa (TR)
(72) Inventor: ULUAG, Onur, 45030 Manisa (TR); BAKANOGLU, Kagan, 45030 Manisa (TR)
(74) Representative: Ascherl, Andreas

(57) **Abstract**

The present invention refers to a method for controlling of at least one external device in dependency of video and/or audio content. The method comprises at least the steps:
Detecting external devices,
providing video data (2) and/or audio data (1) and/or subtitle data (3), in particular as file or stream,
analyzing the video data (2) and/or audio data (1) and/or subtitle data (3) by means of an environment prediction engine (4),
wherein the environment prediction engine (4) outputs environment data (5),
wherein the environment data (5) comprises control data for controlling of at least one of the detected devices.

## Description

The present invention refers according to claim 1 to a method for controlling of at least one external device in dependency of video and/or audio content, according to claim 12 to a computer program product for executing of a method according to any of the preceding claims, according to claim 13 to a multimedia device and according to claim 15 to a multimedia system.

### Background of the invention

The way users are interacting with video data continuously changes due to new services (e.g. streaming) and new devices (e.g. tablet PC). Most of these changes provide an increase of user comfort.

The company Google offers a service called "CLOUD VIDEO INTELLIGENCE" this service enables content analysis of video files. This system works on cloud and processes video to acquire metadata. This data then be used to search videos Thus, specific objects can be detected within video data stored in the cloud.

### Object of the invention

It is the object of the present invention to provide a method, a computer program product, a multimedia device and a multimedia system which further increases the user experience during watching TV.

### Description of the invention

The before mentioned object is solved by a method for controlling of at least one external device in dependency of video and/or audio content according to claim 1. The method preferably comprises at least the steps: Detecting external devices, providing video data and/or audio data and/or subtitle data, in particular as data file or stream, in particularly live stream, analyzing the video data and/or audio data and/or subtitle data by means of an environment prediction engine, wherein the environment prediction engine outputs environment data, wherein the environment data comprises control data for controlling of at least one of the detected devices. This solution is beneficial since smart home devices can be operated in dependency of the video data and/or audio data and/or subtitle data, thus the overall user experience is more immerse. According to the present invention audio, video and text processing methods are used to predict environmental conditions and conditions of objects on a video, audio stream with or without subtitle. This solution is also about predicting environmental conditions and conditions changes of the video automatically. This environmental condition data is stored as a file or any storage format that contains synchronization information.

Further preferred embodiments of the present invention are subject-matter of the following specification passages and/or of the dependent claims.

According to a further preferred embodiment of the present invention the environment prediction engine is executed by a processor unit, wherein the processor unit and the external devices are assigned to the same network, in particularly local network, in particularly a Wi-Fi network. This embodiment is beneficial since the environment prediction can be performed in dependency of the external devices available within said network.

The video data and/or audio data and/or subtitle data is at least partially stored according to a further preferred embodiment of the present invention in a data memory, in particular a buffer memory, wherein the environment prediction engine analyzes video data and/or audio data and/or subtitle data stored in the data memory, wherein the environment data comprises device identification data, time stamp data and actuation data, wherein the device identification data identifies a class of devices, wherein the class of devices provides at least one common function, wherein the time stamp data defines an actuation time of at least one external device of the respective class and wherein actuation data defines actuation or pausing of said at least one external device of the respective class. It is further possible to delay individual or all devices or to start individual or all devices in a predefined time interval with respect to the time stamp, in particularly in case such an external device does not cause the desired effect instantly, like a heater or air condition. This embodiment is beneficial the operation respectively actuation of the respective external device can be matched with the video data and/or audio data and/or subtitle data very precisely.

Multiple external devices are detected according to a further preferred embodiment of the present invention. The external devices can be of the same type or of different types and wherein individual devices can provide class data with respect to multiple classes. The classes of loT devices can be but are not limited to: Lighting: Changing ambient light, color, also changing lighting level. Dimmer: Can be used as lightning level actuator. Temperature sensor: Learning ambient temperature which will be used as feedback for other smart devices. Haptic: Create vibration for any wearable. For instance, a man in the video stream is exposed to violence and wearable wrist band can vibrate to create an immersive reality. Intermediate controllers to control devices with different protocols. Intermediate router/repeater/gateway. Siren, Alarm, Doorbell: For instance, while watching a horror movie, and a scene that doorbell (siren or alarm) bells to make loud noise to scare people, can be more effective on audiences if belling the real doorbell in the house. Wired and wireless speakers (Bluetooth speakers): For instance, while watching a horror movie, and a scene there is a crackle sound that comes from a room away can be simulated by speakers. Each speaker can be selected as near, mid-range or far away device. Keypad: For instance, during movie, there may be a puzzle that starring actor/actress tries to solve, and when scene comes to entering the password, Smart Player may pause the video and ask audience to enter the password. Gas detector, smoke detector, humidity detector, fume detector, gas actuator, fog machine: For instance, if scene is smoky, foam machine can be used to simulate same environment. Air Conditioner, heater, ventilation: Can be used clearing environment from smoke when scene is over. This actuation command may not be included in the stream, but can be determined by Smart Player by comparing smoke level of scenes. Fan: Similar use case of Ventilation. But can also be used as wind effect. Smart device, in particular smart phone: Fake call, phone alert such as SMS, notification, vibration via mobile application. Motors, acceleration sensor, lock, door lock: Kind of actuation is advised by Smart Player to audience to select correct matching. Shade, curtain, blinds. On/off switch: Kind of actuation is advised by Smart Player to audience to select correct matching. Any web services: Food ordering, car alarm

According to a further preferred embodiment of the present invention one device class refers to devices that cause lighting or light effects, wherein actuation of devices assigned to said class is caused in dependency of video color and/or video intensity and/or one device class refers to devices that cause vibrations, wherein actuation of devices assigned to said class is cause in dependency of an evaluation of at least 2 consecutive frames of the stream and/or by processing of audio data and/or one device class refers to devices that cause heating and/or cooling, wherein actuation of devices assigned to said class is cause in dependency of an evaluation of video and/or audio and/or subtitle content, wherein the scene is analyzed with respect to the color of the scene and/or the clothes of the persons and/or the weather conditions and/or one device class refers to devices that cause opening or closing of curtains, blinds or shades, wherein actuation of devices assigned to said class is cause in dependency of an evaluation of video and/or audio and/or subtitle content, wherein the scene is preferably analyzed with respect to the color of the scene and/or one device class refers to devices that cause outputting of sounds, wherein actuation of devices assigned to said class is cause in dependency of an evaluation of the audio data and/or subtitle data, wherein the subtitle data preferably identifies sounds like door bells or crackles, and/or one device class refers to devices that cause generating of smoke, wherein actuation of devices assigned to said class is cause in dependency of an evaluation of the video and/or subtitle data.

The environment prediction engine comprises according to a further preferred embodiment of the present invention one or at least one audio processing algorithm and/or one or at least one video processing algorithm and/or one or at least one subtitle processing algorithm and/or one or at least one object recognition algorithm and/or one or at least one object state recognition algorithm and/or one or at least one machine learning algorithm. This embodiment is beneficial since the object within the video data and/or audio data and/or subtitle data can be detected and/or actions of said objects can be detected and/or states of said objects can be detected and/or locations and distances between defined objects can be detected and/or time stamps can be set to trigger the respective external device in dependency of the video data and/or audio data and/or subtitle data. Furthermore, this embodiment enables a local data processing, thus video data and/or audio data and/or subtitle data, in particularly the combination thereof, can be analyzed by a local device, like a TV, STB, laptop, smart phone, tablet PC.

A control unit processes according to a further embodiment of the present invention the video and/or audio data for outputting the video and/or audio content and processes the environmental data in dependency of the outputted content for actuating respectively operating the external device. This embodiment is beneficial since the content of the video and/or audio and/or subtitle data can be processed in dependency of the available devices, in particular external devices respectively loT devices. The control unit is preferably part of a set-top box or TV.

Environment data is embedded according to another embodiment of the present invention by the environment prediction engine in the video data, in particular in MPEG format, and processed by the control unit. This embodiment is beneficial since established data formats can be used to transport the additional control data.

The video data and/or audio data represents according to a further preferred embodiment of the present invention a movie. Preferably is at least one of the external devices part of an infrastructure of a building. This embodiment is beneficial since building infrastructure is positioned at defined positions and causes significant effects, thus the user experience is more immerse.

Video data and/or audio data is captured according to a further prefer embodiment in real time and represent traffic conditions, wherein the external devices are part of vehicle, like lights or horn or air condition. This embodiment is beneficial since video data and/or audio data can be captured live and utilized for controlling vehicle functions, in particularly with respect to autonomous driving. This embodiment is highly beneficial in locations where no satellite signal (e.g. GPS) or data signal (e.g. 5G, Wi-Fi, etc.) is available, like in an underground garage.

In the present invention, the term "smart device" defines a device that has an output means for outputting information, in particularly a display, an internet connectivity, in particularly Wi-Fi and/or GSM, for exchanging data and preferably an interface for inputting data by a user.

According to a preferred embodiment of the present invention position data with respect to the position of the external device, in particular for identifying the distance between an external device and the display unit, is provided, wherein the external device is operated in dependency of its class and the position data. This embodiment is beneficial since very precise effects can be generated, thus the generated ambient atmosphere can be simulated very close to reality.

The position data of the external device is gathered according to a further preferred embodiment of the present invention by means of visual position detection and/or beacons and/or a wi-fi positioning system and/or by manually registering the position of the external device/s via a user interface. This embodiment is beneficial since such a position detection is reliable, accurate and user friendly.

The user interface is displayed respectively provided according to a further preferred embodiment of the present invention by means of a smart device, in particularly a smartphone, tablet PC, smart watch or smart TV. This embodiment is beneficial since a map can be displayed and since the respective external devices can be registered easily, in particular by drag and drop, or just by touching or clicking onto the respective position of the user-interface.

The present invention further prefers to a computer program product for executing of a method according to any of the preceding claims.

The above mentioned object is also solved by a multimedia device, in particular TV or set-top box, according to claim 13. The multimedia device according to the present invention preferably comprises at least an input port for receiving device data of at least one external devices, an input port for inputting video data and/or audio data and/or subtitle data, in particular as file or stream, a data analyzing unit for analyzing the video data and/or audio data and/or subtitle data by means of an environment prediction engine, wherein the environment prediction engine outputs environment data, wherein the environment data comprises control data for controlling of the at least one detected device, an output port for outputting control data and/or control signals for controlling of the at least one detected device in dependency of the video data and/or audio data and/or subtitle data. A display unit for displaying video content provided by the video data is preferably also part of the multimedia device, in particular TV.

The above mentioned object is also solved by a multimedia system according to claim 15. The multimedia system preferably comprises at least multiple external internet of things devices (loT-devices), a data analyzing unit for analyzing video data and/or audio data and/or subtitle data by means of an environment prediction engine, wherein the environment prediction engine outputs environment data, wherein the environment data comprises control data for individually controlling of the multiple external internet of things devices, at least one display unit and a network, wherein the external internet of things devices and the control unit are connected to the same network, wherein the external loT-devices are actuated in dependency of the displayed video content.

Thus, the present invention can be used as a software product (like media player software, browser plugin etc.), embedded software application, SaaS (Software as a Service), cloud software or browser plugin etc or as a device such as media player devices, CD/DVD/Blu-Ray players, TV, STB, Smart Home Hub etc.

Furthermore, the present invention can be used in the fields of home entertainment systems, multimedia systems, vehicles and autonomous vehicles such as self-driving cars by prediction environment using cameras attached to its body, smart homes, intelligent homes by detecting conditions using cameras and taking required actions, security systems, environmental data loggers etc.

Further benefits, goals and features of the present invention will be described by the following specification of the attached figure, in which exemplarily components of the invention are illustrated. Components of the devices, units and methods according to the invention, which match at least essentially with respect to their function can be marked with the same reference sign, wherein such components do not have to be marked or described multiple times with respect to said figure. In the following the invention is just exemplarily described with respect to the attached figure.

### Brief Description of the Drawings

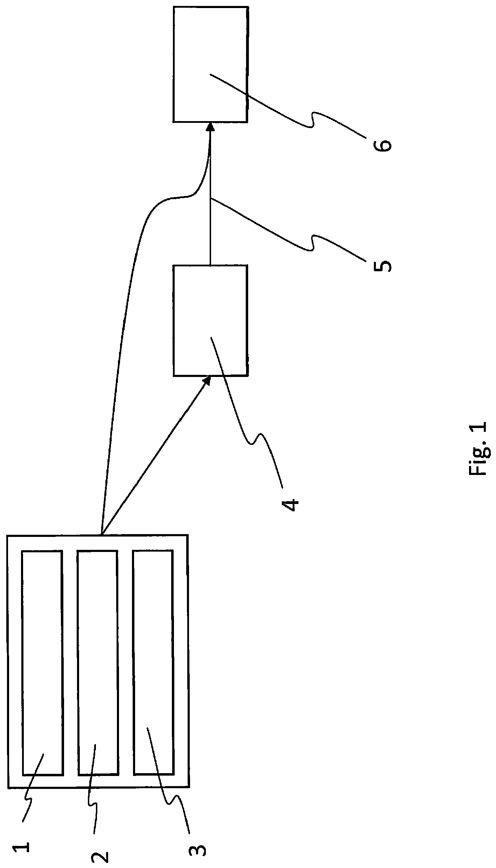

- Fig. 1: schematically illustrates data processing according to the present invention and
- Fig. 2: schematically illustrates an example of an environment data table.

### Detailed Description of the Drawings

Reference number 1 indicates audio data, in particularly provided as data stream or data file. Reference number 2 indicates video data, in particularly provided as data stream or data file and reference number 3 indicates subtitle data, in particularly provided as data stream or data file contains audio data. The subtitle data preferably comprises subtitles for multiple languages.

An environment prediction engine (EPE) is indicated by reference number 4. Said environment prediction engine 4 preferably comprises the combination of audio, video and text processing algorithms, object recognition algorithms, object state recognition algorithms, machine learning algorithms etc. The environment prediction engine 4 preferably outputs environment data 5. The environment data 5 preferably contains the objects, situations and/or environment conditions to be used to control loT devices. A control unit respectively player 6 is responsible of playing AV (Audio, Video) streams (or files) and reading data from environment data 5, and forwards this information to loT devices accordingly. Environment data 5 can be embedded in MPEG standard so that player 6 can decode it without any interoperability issue.

EPE 4 preferably runs as soon as the audio stream 1, video stream 2 and subtitle stream 3 are received and environment data 5 is created. Player 6 preferably can use some buffer so that the streams and environment data are played synchronously at the player 6. Player 6 can be the players in CD/DVD/Blu-Ray players, TV, STB.

Thus, audio, video and/or text processing methods are used to predict environmental conditions on a multimedia stream such as motion picture. Prediction is made by processing streams using software. Predicted environmental conditions and conditions changes of a movie is stored on a buffer memory or a file or any storage. Data preferably contains timestamp information. Then, the information gathered is used to control devices, in particularly loT devices registered in a network, in particular local network, while the multimedia stream is being played.

The present invention can be used for runtime prediction and actuation and prediction and/or prediction and storage. The storage of information enables audiences to get a file from other services such as Internet and watching a movie with the downloaded file. This process is similar to subtitles.

Predicted environment data can be but not limited to:
Lightning information can be predicted by processing the video colour and intensity.

Multiple lighting levels can be predicted using different parts of video.

Vibration information can be predicted by comparing 2 consecutive frames of the stream. Processing audio together may increase accuracy.

Object detection can be done using state of the art methods. The movement and size changes of the objects and objects-to-object differences can be used to predict 3D model of the scene and this information can be used when predicting other data such as vibration level.

Temperature can be predicted by processing audio/video/text and clothes of actors/actresses, sweat, rain, snow, sun, colour of part of the scene, wind sound, rain sound, words in subtitle etc.

Opening curtains/blinds/shade can be detected by processing audio/video/text processing, and this information can be sent to curtains to actuate.

Different object sounds can be determined by processing audio of the stream. This data can be sent to related device to actuate. For instance, doorbell can be simulated by real doorbell by detecting doorbell sound in the scene. Also, different sounds can be detected like, alarms, screams, crashes, door closings, phone rings etc. This information can be used to actuate a real door or fake ringing the audience phone by application.

Smoke can be detected by processing video data.

Subtitle can be processed to detect certain sounds. They are usually given in different format than normal text. Crackle sound far away can be detected by text processing and this information can be sent to speakers far away in the watching environment to simulate real conditions in the movie

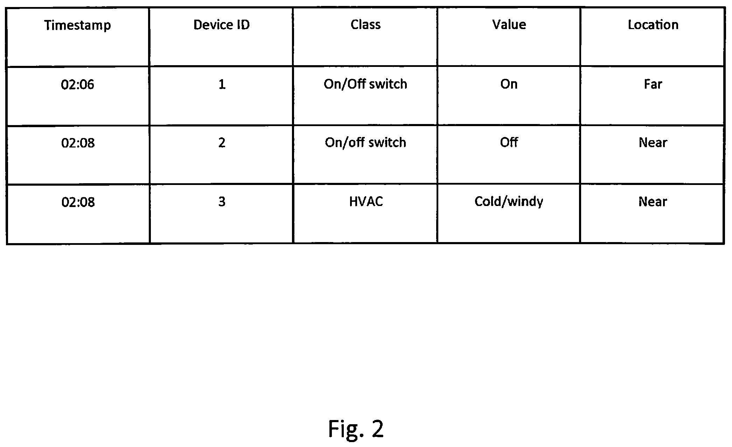

An example format of environment data 5 is given in Fig. 2. Environment data 5 may include the time information, device identification number, device class, device value, device location. The devices classes can be but not limited:
Light/Dimmer, Switch, Alarm/Siren, Lock/Door Lock, Humidity, Temperature/Heater/AC, Ventilation, Acceleration, Sound, Smoke/Fume, Phone Ring, Notification, Shade/Blind/Curtain.

Thus, the present invention refers to a system or method for controlling of at least one external device in dependency of video and/or audio content, at least comprising the steps: Detecting external devices, providing video data 2 and/or audio data 1 and/or subtitle data 3, in particular as file or stream, analyzing the video data 2 and/or audio data 1 and/or subtitle data 3 by means of an environment prediction engine 4, wherein the environment prediction engine 4 outputs environment data 5, wherein the environment data 5 comprises control data for controlling of at least one of the detected devices.

### List of reference numbers

- 1: audio data
- 2: video data
- 3: subtitle data
- 4: environment prediction engine
- 5: environment data
- 6: player

## Claims

1. Method for controlling of at least one external device in dependency of video and/or audio content,
at least comprising the steps:
Detecting external devices,
providing video data (2) and/or audio data (1) and/or subtitle data (3), in particular as file or stream,
analyzing the video data (2) and/or audio data (1) and/or subtitle data (3) by means of an environment prediction engine (4),
wherein the environment prediction engine (4) outputs environment data (5),
wherein the environment data (5) comprises control data for controlling of at least one of the detected devices.

2. Method according to claim 1,
**characterized in that**
the environment prediction engine (4) is executed by a processor unit, wherein the processor unit and the external devices are assigned to the same network, in particularly local network.

3. Method according to claim 1 or 2,
**characterized in that**
the video data (2) and/or audio data (1) and/or subtitle data (3) is at least partially stored in a data memory, in particular a buffer memory,
wherein the environment prediction engine (4) analyzes video data (2) and/or audio data (1) and/or subtitle data (3) stored in the data memory,
wherein the environment data (5) comprises device identification data, time stamp data and actuation data,
wherein the device identification data identifies a class of devices,
wherein the class of devices provides at least one common function,
wherein the time stamp data defines an actuation time of at least one external device of the respective class and
wherein actuation data defines actuation or pausing of said at least one external device of the respective class.

4. Method according to claim 3,
**characterized in that**
one device class refers to devices that cause lighting or light effects, wherein actuation of devices assigned to said class is caused in dependency of video color and/or video intensity
and/or
one device class refers to devices that cause vibrations, wherein actuation of devices assigned to said class is cause in dependency of an evaluation of at least 2 consecutive frames of the stream and/or by processing of audio data
and/or
one device class refers to devices that cause heating and/or cooling, wherein actuation of devices assigned to said class is cause in dependency of an evaluation of video and/or audio and/or subtitle content, wherein the scene is analyzed with respect to the color of the scene and/or the clothes of the persons and/or the weather conditions
and/or
one device class refers to devices that cause opening or closing of curtains, blinds or shades, wherein actuation of devices assigned to said class is cause in dependency of an evaluation of video and/or audio and/or subtitle content, wherein the scene is preferably analyzed with respect to the color of the scene
and/or
one device class refers to devices that cause outputting of sounds, wherein actuation of devices assigned to said class is cause in dependency of an evaluation of the audio data and/or subtitle data, wherein the subtitle data preferably identifies sounds like door bells or crackles,
and/or
one device class refers to devices that cause generating of smoke, wherein actuation of devices assigned to said class is cause in dependency of an evaluation of the video and/or subtitle data.

5. Method according to any of the preceding claims,
**characterized in that**
the environment prediction engine (4) comprises
at least one audio processing algorithm and/or
at least one video processing algorithm and/or
at least one subtitle processing algorithm and/or
at least one object recognition algorithm and/or
at least one object state recognition algorithm and/or
at least one machine learning algorithm.

6. Method according to any of the preceding claims,
**characterized in that**
a control unit processes the video data (2) and/or audio data (1) for outputting the video content and/or audio content and processes the environmental data (5) in dependency of the outputted content for actuating the external device.

7. Method according to any of the preceding claims,
**characterized in that**
the video data (2) and/or audio data (1) and/or subtitle data (3) is provided as data file or as stream.

8. Method according to any of the preceding claims 6 or 7,
**characterized in that**
environment data is embedded by the environment prediction engine (4) in the video data (2), in particular in MPEG format, and processed by the control unit.

9. Method according to any of the preceding claims,
**characterized in that**
the control unit is part of a set-top box or TV.

10. Method according to any of the preceding claims 1 to 8,
**characterized in that**
video data (2) and/or audio data (1) represents a movie,
wherein at least one of the external devices is part of an infrastructure of a building.

11. Method according to any of the preceding claims 1 to 9,
**characterized in that**
video data (2) and/or audio data (1) is captured in real time and represent traffic conditions,
wherein the external devices are part of vehicle.

12. Computer program product for executing of a method according to any of the preceding claims.

13. Multimedia device, in particular TV or set-top box,
at least comprising
an input port for receiving device data of at least one external devices,
an input port for inputting video data (2) and/or audio data (1) and/or subtitle data (3), in particular as file or stream,
a data analyzing unit for analyzing the video data (2) and/or audio data (1) and/or subtitle data (3) by means of an environment prediction engine (4),
wherein the environment prediction engine (4) outputs environment data (5),
wherein the environment data (5) comprises control data for controlling of the at least one detected device,
an output port for outputting control data and/or control signals for controlling of the at least one detected device in dependency of the video data (2) and/or audio data (1) and/or subtitle data (3).

14. Multimedia device according to claim 13,
at least comprising
a display unit for displaying video content provided by the video data (2).

15. Multimedia system,
at least comprising
multiple external internet of things devices (loT-devices) (14)
a data analyzing unit for analyzing video data (2) and/or audio data (1) and/or subtitle data (3) by means of an environment prediction engine (4),
wherein the environment prediction engine (4) outputs environment data (5),
wherein the environment data (5) comprises control data for individually controlling of the multiple external internet of things devices,
at least one display unit for displaying the video content,
and a network, wherein the external internet of things devices and the control unit are connected to the same network,
wherein the external lot-devices are actuated in dependency of the displayed video content.
